# EUROPEAN PATENT APPLICATION

(11) **EP 1 495 857 A1**
(43) Date of publication of application: **12.01.2005**
(21) Application number: 04103165.9
(22) Date of filing: 05.07.2004
(51) Int. Cl.: B32B 1/08, C08L 23/16, F16L 11/08

(54) **Air conditioning hose**

(30) Priority: 11.07.2003 US 486519 P
(71) Applicant: THE GOODYEAR TIRE & RUBBER COMPANY, Akron, Ohio 44316-0001 (US)
(72) Inventor: Wilson, Reji Paul, Fairlawn OH 44333 (US); Mennig, Gary James, Beaver Dam WI 53916 (US)
(74) Representative: Kutsch, Bernd

(57) **Abstract**

The present invention relates to a hose (110) comprising a rubber layer (111) and a polyamide barrier (112) layer overlaying the rubber layer (111). The rubber layer (110) is comprised of a rubber composition comprising from 70 to 90 parts by weight of a first ethylene-propylene-diene (EPDM) terpolymer having an ethylene content of from 45 to 65 percent by weight; and from 10 to 30 parts by weight of a second EPDM having an ethylene content of from 65 to 80 percent by weight; wherein the ethylene content of the first EPDM is from 3 to 20 percent by weight less than the ethylene content of the second EPDM.

## Description

### Background of the Invention

Hoses have been developed which are useful for automobile air conditioners, wherein hoses or other suitable flexible conduit members are employed for the purpose of joining the principal operating components of the refrigerating device. These hoses should have good flexibility, high strength, the ability to bend to small radii without kinking, small outside diameter in relation to inside diameter and impermeability to the fluids involved. In addition, these refrigeration hoses are subjected to temperature extremes in under-the-hood applications, and further, must meet requirements for proper coupling attachment.

Prior art automotive air conditioner hoses employ a three-layer structure. The innermost tubular layer of the hose is typically formed of an elastomeric material intended to keep the refrigerant fluid and compressor lubricant in the hose and moisture and air out. A layer of reinforcing braiding is wound upon the outside surface of the inner tube. An outer layer of elastomer resistant to ozone, engine oil and other contaminating materials likely to be present in the engine compartment is typically extruded over the braided reinforcement. In hoses of this type, the inner layer is acrylonitrile-butadiene rubber or chlorosulfonated polyethylene, the braiding fibers may be rayon and other conventional fibers, and the outer layer is neoprene or EPDM.

Even though numerous refrigerant hose designs have been developed, they fail to combine low refrigerant permeability, low water permeability, high flexibility, vibration resistance and good coupling properties to the hose over temperature extremes.

Conventional hoses, due to the thickness and a corresponding lack of flexibility, provide little noise damping. The noise generated can be detected within the passenger cabin of the automobile. It is desired by the automotive industry to reduce cabin noise as much as possible to provide a quiet ride. The more flexible the hose is, the greater the noise damping effect of the hose. The present invention is directed toward a hose with greater flexibility and, thus, greater noise dampening.

The normal operating temperatures encountered by air conditioning hose assemblies employed in automotive air conditioning generally range from -30° to 120°C. Design specifications require that such hose assemblies operate equally well at temperature ranges of -40° to +150°C. The higher temperatures are due mainly to the location of the system proximate the engine as well as from the heat generated in compressing the refrigerant as a gas.

### Summary of the Invention

The invention relates to a hose according to claim 1. The dependent claims relate to preferred embodiments of the invention. The EPDM layer is capable of bonding to a polyamide layer without the use of an external adhesive between them.

### Detailed Description of the Invention

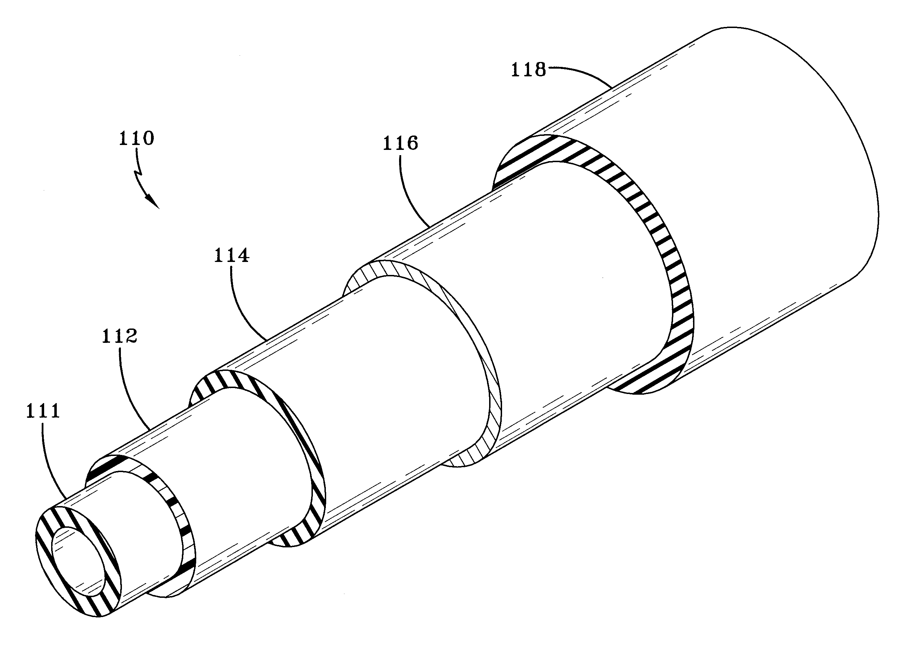

With reference to Fig. 1, in one embodiment the hose 110 of the present invention includes an innermost rubber layer 111, a polyamide barrier layer 112 overlaying the innermost rubber layer 111, a friction rubber layer 114 overlaying the barrier layer 112, a reinforcing layer 116 overlaying the friction rubber layer 114, and a cover layer 118 overlaying the reinforcing layer 116.

The innermost, or core rubber layer of the hose includes a rubber composition comprising a first and second ethylene-propylene-diene (EPDM) terpolymers. In one embodiment, the rubber composition comprises from 70 to 90 parts by weight of a first EPDM, and from 10 to 30 parts by weight of a second EPDM.

Suitable first EPDM include those having an ethylene content from 45 to 65 percent by weight. The first EPDM also includes from 1 to 10 percent by weight of a diene monomer, and the balance substantially of propylene. In one embodiment, the first EPDM comprises ethylidene norbornene. In another embodiment, the first EPDM comprises a diene monomer selected from those as are known in the art and are commonly used in preparation of EPDM. Such diene monomers include, but are not limited to, any appropriate non-conjugated diene may be used including, for example, 1,4-hexadiene, dicyclopentadiene or ethylidene norbornene (ENB). In one embodiment, the first EPDM is Buna EP T 2460, available from Bayer, as an ethylene-propylene-ethylidene norbornene terpolymer with about 62 percent by weight of ethylene, about 4 percent by weight of ENB, and a Mooney viscosity 1+8 (100°C) of about 33.

Suitable second EPDM include those having an ethylene content from 65 to 80 percent by weight. The second EPDM also includes from 1 to 10 percent by weight of a diene monomer, and the balance substantially of propylene. In one embodiment, the second EPDM comprises ethylidene norbornene. In another embodiment, the second EPDM comprises a diene monomer selected from those as are known in the art and are commonly used in preparation of EPDM. Such diene monomers include, but are not limited to, any appropriate non-conjugated diene may be used including, for example, 1,4-hexadiene, dicyclopentadiene or ethylidene norbornene (ENB). In one embodiment, the second EPDM is Vistalon 3708, available from ExxonMobil Chemical, as an ethylene-propylene-ethylidene norbornene terpolymer with about 70 percent by weight of ethylene, about 3.4 percent by weight of ENB, and a Mooney viscosity 1+4 (125°C) of about 52.

The first and second EPDM differ in their ethylene content. In one embodiment, the ethylene content of the first EPDM is from 3 to 20 percent by weight less than the ethylene content of the second EPDM; for example, in this embodiment, for a second EPDM having an ethylene content of 70 percent by weight, suitable first EPDM may have a ethylene content of from 50 to 67 percent by weight. In another embodiment, the ethylene content of the first EPDM is from 3 to 15 percent by weight less than the ethylene content of the second EPDM. In another embodiment, the ethylene content of the first EPDM is from 3 to 9 percent by weight less than the ethylene content of the second EPDM.

The rubber composition in the innermost rubber layer includes any of the various additives that are commonly used in EPDM compositions in hoses; for example, the rubber composition generally contains an adhesive system and a curative.

The peroxide curative useful in the rubber composition are those that are normally used in such base stocks. For example peroxides ,such as dicumyl peroxide, α-α-bis(t-butylperoxide)diisopropylbenzene, benzoyl peroxide, 2,4-dichlorobenzoyl peroxide, 1,1-bis(t-butylperoxy)3,3,5-trimethylcyclohexane, 2,5-dimethyl-2,5-bis(t-butylperoxy)hexane, 2,5-dimethyl-2,5-bis(t-butylperoxy)hexyne-3, and n-butyl 4,4-bis(t-butylperoxy)valerate. The most preferred and commercially available peroxide curatives are Percadox TM 14/40 from Noury Chemical Corporation and Vul-Cup TM from Penwalt Corporation. From 1 to 10 parts of peroxide are utilized based on 100 parts of base polymer. Peroxides are preferred as the curative since they are less sensitive to premature resin formation.

The adhesive systems useful in the rubber composition are the conventionally known adhesive systems for use with peroxide cured elastomers. For example, maleinized 1,2-polybutadiene resin may be used.

The rubber composition may also contain various additives in conventional or suitable amounts, see for example The Vanderbilt Rubber Handbook, R.T. Vanderbilt Company, Thirteenth Edition, 1990. Such additives may include, and are not limited to, retardants to prevent an unduly quick cure, antioxidants, processing aids, reinforcing agents such as carbon black, silica, and the like, and various plasticizers. In one embodiment, the rubber composition may include from 50 to 120 parts by weight of carbon black, per 100 parts by weight of first and second EPDM.

The barrier layer includes at least one polyamide. Polyamide is preferred as providing a good balance between refrigerant impermeability and flexibility. Suitable polyamides for use in the barrier layer include any of the polyamides as are known in the art, including, but not limited to, nylon 6, nylon 66, nylon 11, or blends thereof. The polyamide may include one or more additives to promote adhesion; these may include polyolefins such as polyethylene or polypropylene, or one or more EPDM identical to those used in the innermost layer. If a polyolefin or EPDM is included in the polyamide barrier layer, the weight ratio of polyamide to polyolefin or EPDM ranges from 95/05 to 85/15. In one embodiment, a blend of nylon 6 and nylon 66 with a nylon 6 to nylon 66 weight ratio in a range of from 1 to 3 may be used. In another embodiment, the polyamide barrier layer may comprise two polyamide sublayers, for example, a first layer of nylon 6 and a second layer of nylon 66.

Additionally, the polyamide resin may be non-plasticized. The polyamide barrier layer may be formed by conventional methods, such as extrusion. While conventionally a non-plasticization of the resin would result in a tube of higher bending strength and lower flexibility, the effects are mitigated by optimizing the thickness of the layer.

The thickness of the differing layers of the hose is linked to the desired characteristics, as excessively thin wall thicknesses or excessively thick wall thicknesses present flexibility or kinking problems or coupling compatibility problems of the final hose composite. For every thousandths of a centimeter increase in the thickness of the hose, the flexibility of the hose decreases. For hoses with an inside diameters (ID) of 13 mm and an outside diameter (OD) of 19.5 mm, the ID of the hose has a maximum value of 13.46 mm and a minimum value of 12.44 mm, while the OD has a maximum value of 19.9 mm and a minimum value of 18.9 mm. The wall thickness of the hose is within the range of 2.72 mm and 3.73 mm. But, as every incremental thickness of the hose decreases the desired properties of the hose, the smallest wall thickness, without a loss of impermeability and creation of kinking problems, is preferred. The preferred wall thickness for a 13 mm ID hose, in accordance with the disclosed invention, is about 3.17 mm.

The wall thicknesses of the polyamide barrier layer is within the range of 0.14 to 0.16, with a preferred thickness of 0.15 mm, for a 13 mm ID hose. This thickness provides the required flexibility without kinking. One skilled in this art will appreciate that for other size hoses, the wall thickness for the polyamide barrier layer may differ, yet still provide the necessary flex, impermeability and freedom from kinking.

Radially outward of the polyamide barrier layer is a rubber friction layer. One skilled in this art will appreciate that the rubber friction layer may be applied in the form of a sheet either spirally wrapped or butt seamed. These methods of applying such layers are known in the art, and variations thereof are contemplated herein. The rubber friction layer generally comprises an polychloroprene (CR) or EPDM composition, with additives as disclosed herein for the innermost rubber layer. In one embodiment, the rubber friction layer includes first and second EPDM having characteristics as disclosed herein for the innermost rubber layer. In one embodiment, the rubber friction layer comprises a rubber composition identical to that in the innermost rubber layer.

The thickness of the friction layer, for 13 mm ID hoses, is optimized at a thickness ranging from 1.000 to 1.020 mm, with a preferred thickness of 1.016 mm. One skilled in this art will appreciate that for other size inside diameter hoses, the wall thickness for the friction layer may vary, yet still provide the necessary adhesion characteristics.

Outward of the friction barrier layer is a reinforcement layer. The reinforcement layer may be comprised of spirally wound reinforcement strands, laid under sufficient tension to improve the strength of the hose structure. Alternatively, the reinforcement layer may be a braided layer. The reinforcement strands are laid at angles such that flexing of the hose will not result in collapse or kinking. An angle such as 52° to 56° with respect to the centerline of the hose has been found acceptable. Most preferably, a neutral angle of 54° or below has been found advantageous for the spiral wraps.

To provide the inventive hose with excellent strength and flexibility, a textile reinforcement strand with high flex dynamic performance is desired. In one embodiment, the textile reinforcement strands are adhesively treated polyester fibers, such as polyethylene terephthalate. The textile reinforcement may be formed by braiding, spiraling, knitting, or helical knitting of yarn. The yarn may be selected from conventional hose reinforcing yarns such as glass, steel, cotton, polyester, or aramid fibers, or a blend of any of these fibers

The thickness of the reinforcement layer is dependent upon the strand thickness. To achieve the desired overall thickness of the hose, the reinforcement layer has a thickness of 0.625 to 0.645 mm, with a preferred width of 0.635 mm for the 13 mm ID hose.

The outermost cover layer is placed on the outside of the hose construction. The cover layer includes at least one elastomer selected from known cover layer materials, including but not limited to nitrile-butadiene rubber (NBR), chlorosulfonated polyethylene rubber (CSM), ethylene-propylene-diene rubber (EPDM), butyl rubber (IIR), chlorinated butyl rubber (CI-IIR), brominated butyl rubber (Br-IIR), epichlorohydrine rubber (CHR, CHC), acrylic rubber (ACM), chloroprene rubber (CR), ethylene-acrylic elastomer (AEM) and the like. In one embodiment, the base stock for the cover layer is chlorinated butyl rubber. The cover layer may include various additives suitable for use in the particular elastomer, as are known in the art, including but not limited to curatives, fillers, plasticizers, colorants, processing aids, etc, for example as disclosed in The Vanderbilt Rubber Handbook, R.T. Vanderbilt Company, Thirteenth Edition, 1990.

The preferred cover thickness for the 13 mm ID tube ranges from 1.35 to 1.45 mm, with a preferred thickness of about 1.37 mm. One skilled in this art will appreciate that for other size hoses, the wall thickness of the various layers of the disclosed hose may vary, while maintaining the desired characteristics in order to provide a highly flexible tube.

The invention will be better understood by reference to the following example.

### EXAMPLE

A hose according to the present invention was prepared with the following noted layers. An innermost rubber layer was formed of a rubber as indicated in Table 1, with amounts expressed in parts by weight. A barrier layer from nylon 6 was formed over the innermost rubber layer containing first and second EPDM. A friction rubber layer, with a composition as set forth in Table 1, was applied to the outerside of the barrier layer. A polyester (PET) reinforcing layer was applied in a conventional manner, to the outerside of the friction coat layer. The polyester reinforcing fibers was treated with a conventional adhesive for improved adhesion and flex dynamic performance. Outward of the reinforcing layer was a chlorinated butyl rubber cover.

**Table 1**

| | |
|---|---|
| EPDM¹ | 80 |
| EPDM² | 20 |
| Polychloroprene ³ | 4 |
| Polyethylene⁹ | 6 |
| Carbon Black ⁴ | 85 |
| Plasticizer⁵ | 3 |
| Zinc oxide | 10 |
| Bonding Agent⁶ | 10 |
| Curative⁷ | 5 |
| Curative⁸ | 2 |

| | |
|---|---|
| ¹ Buna EP T 2460, Bayer, 62 percent by weight ethylene | |
| ² Vistalon 3708, ExxonMobil, 70 percent by weight ethylene | |
| ³ Neoprene W by DuPont or R.T. Vanderbilt | |
| ⁴ N228 and N65 | |
| ⁵ polyethylene glycol, Carbowax PEG 8000 | |
| ⁶ Maleinized 1,2-Polybutadiene Resin | |
| ⁷ α-α-bis(t-butylperoxy) diisopropylbenzene; peroxide; Vul-Cup 40KE by Hercules | |
| ⁸ TAC-DLC co-agent | |
| ⁹ Epolene N14-P | |

The disclosed, exemplary hose exhibits excellent temperature resistance, up to 150° C, high static and dynamic performance, and high noise dampening.

## Claims

1. A hose comprising a rubber layer (111) and a polyamide layer (112) overlaying the rubber layer (111), **characterized in that** the rubber layer (111) is comprised of a rubber composition comprising from 70 to 90 parts by weight of a first ethylene-propylene-diene (EPDM) terpolymer having an ethylene content of from 45 to 65 percent by weight, and from 10 to 30 parts by weight of a second EPDM having an ethylene content of from 65 to 80 percent by weight, wherein the ethylene content of the first EPDM is from 3 to 20 percent by weight less than the ethylene content of the second EPDM.

2. The hose of claim 1, wherein the rubber composition further comprises from 50 to 120 parts by weight, per 100 parts by weight of first and second EPDM, of carbon black.

3. The hose of claim 1 or 2, wherein the rubber composition is peroxide cured.

4. The hose of claim 1, wherein the rubber layer is an innermost rubber layer (111), wherein the polyamide layer is a polyamide barrier layer (112) overlaying the innermost rubber layer (111), and wherein the hose (110) further comprises a friction rubber layer (114) overlaying the polyamide barrier layer (112), a reinforcing layer (116) overlaying the polyamide barrier layer (112), and a cover layer (118) overlaying the reinforcing layer (116).

5. The hose of claim 4, wherein the friction rubber layer (114) comprises EPDM.

6. The hose of claim 4 or 5, wherein the friction rubber layer (114) comprises a rubber composition identical to the rubber composition of the innermost rubber layer (111).

7. The hose of claim 4, wherein the reinforcing layer (116) comprises a textile reinforcement selected from glass, steel, cotton, polyester, aramid fibers, or a blend thereof.

8. The hose of claim 4, wherein the cover layer (118) comprises at least one elastomer selected from nitrile-butadiene rubber (NBR), chlorosulfonated polyethylene rubber (CSM), ethylene-propylene-diene rubber (EPDM), butyl rubber (IIR), chlorinated butyl rubber (CI-IIR), brominated butyl rubber (Br-IIR), epichlorohydrine rubber (CHR, CHC), acrylic rubber (ACM), chloroprene rubber (CR), and ethylene-acrylic elastomer (AEM).

9. The hose according to at least one of the previous claims, comprising:
an innermost rubber layer (111) having a rubber composition comprising from 70 to 90 parts by weight of a first ethylene-propylene-diene (EPDM) terpolymer having an ethylene content of from 45 to 65 percent by weight, and from 10 to 30 parts by weight of a second EPDM having an ethylene content of from 65 to 80 percent by weight, wherein the ethylene content of the first EPDM is from 3 to 20 percent by weight less than the ethylene content of the second EPDM;
a barrier layer (112) overlaying the innermost rubber layer (111), the barrier layer (112) comprising a polyamide;
a friction rubber layer (114) overlaying the barrier layer (112), the friction rubber layer (114) comprising EPDM;
a reinforcing layer (116) overlaying the barrier layer (112), the reinforcing layer (116) comprising a polyester textile reinforcement; and
a cover layer (118) overlaying the reinforcing layer (116), the cover layer (118) comprising chlorinated butyl rubber.

10. The hose of at least one of the previous claims, wherein the first and second EPDM comprise ethylidene norbornene.
